# DEMANDE DE BREVET EUROPEEN

(11) **EP 1 065 895 A1**
(43) Date de publication de la demande: **03.01.2001**
(21) Numéro de dépôt: 00401737.2
(22) Date de dépôt: 19.06.2000
(51) Int. Cl.: H04Q 3/62

(54) **Procédé de contrôle de l'exploitation d'un accès, à signalisation dynamique payante, relatif à une artère reliant des autocommutateurs**

(30) Priorité: 01.07.1999 FR 9908499
(71) Demandeur: ALCATEL, 75008 Paris (FR)
(72) Inventeur: Laroque, Christian, 60599 Frankfurt AM (DE); Bennai, Lahcen, 95100 Argenteuil (FR)
(74) Mandataire: Sciaux, Edmond

(57) **Abrégé**

Procédé de contrôle de l'exploitation d'un accès (A1, A'1), à signalisation dynamique payante, d'une artère (2) reliant deux autocommutateurs (1, 1') notamment en liaison avec des applications qui communiquent au travers d'autocommutateurs et qui sont susceptibles de vouloir exploiter de tels accès.

Ce procédé prévoit une attribution de droits d'utilisation à chaque application concernée permettant à celle-ci soit de faire établir et d'utiliser un tel accès au moins, soit seulement d'utiliser un tel accès une fois que celui-ci a été établi, dans la mesure où un droit d'utilisation lui est attribué.

## Description

L'invention concerne un procédé de contrôle de l'exploitation d'un accès, à signalisation dynamique payante, qui est relatif à une artère reliant deux autocommutateurs entre eux dans un réseau de télécommunications.

L'apparition d'artères, reliant des autocommutateurs, qui ont au moins un accès à signalisation dynamique et payante conduit à la nécessité de pouvoir contrôler l'exploitation de tels accès, pour que les payeurs puissent en maîtriser les coûts. Tel n'était pas le cas précédemment, lorsque les liaisons entre autocommutateurs étaient systématiquement maintenues actives, lorsqu'elles étaient en service, comme cela était notamment le cas dans les réseaux temporels synchrones les plus anciens.

Il est donc devenu nécessaire de pouvoir contrôler l'exploitation de tels accès dynamiques et payants pour éviter qu'un accès ne soit établi et exploité par des applications, par exemple de gestion ou de maintenance périodique, pour des transmissions non urgentes et éventuellement à faible débit qui conduisent à une utilisation peu économique de l'accès ainsi établi.

L'invention propose donc un procédé destiné à permettre de contrôler l'exploitation d'un accès à signalisation dynamique payante relatif à une artère reliant deux autocommutateurs, notamment en liaison avec des applications qui communiquent au travers d'autocommutateurs et qui sont susceptibles de vouloir exploiter de tels accès.

Selon une caractéristique de l'invention, ce procédé prévoit une attribution de droits d'utilisation à chaque application concernée permettant à celle-ci soit d'établir et d'utiliser un tel accès au moins, soit seulement d'utiliser un tel accès une fois que celui-ci a été établi, dans la mesure où un droit d'utilisation lui est attribué.

Selon une caractéristique du procédé selon l'invention, il est prévu une information des applications susceptibles d'avoir à utiliser un accès dynamique payant, dès lors qu'un tel accès est établi pour permettre à ces applications d'utiliser cet accès aussi pleinement que possible.

Selon une caractéristique du procédé selon l'invention, le contrôle du droit attribué à une application est réalisé au niveau de l'autocommutateur initiateur d'un appel en vue de l'établissement d'une communication par un tel accès à signalisation dynamique payante, une même application ayant éventuellement un droit différent suivant l'autocommutateur à partir duquel l'établissement d'une communication est initié.

Selon une caractéristique du procédé selon l'invention, il est prévu une attribution de droits d'exploitation par plages horaires modulables.

L'invention, ses caractéristiques et ses avantages sont précisés dans la description qui suit en liaison avec les figures évoquées ci-dessous.

La figure 1 présente un schéma de principe d'une structure à deux autocommutateurs d'un réseau de télécommunications.

La figure 2 présente un schéma de principe d'un dispositif de contrôle d'accès, tel que mis en oeuvre par le procédé de contrôle selon l'invention.

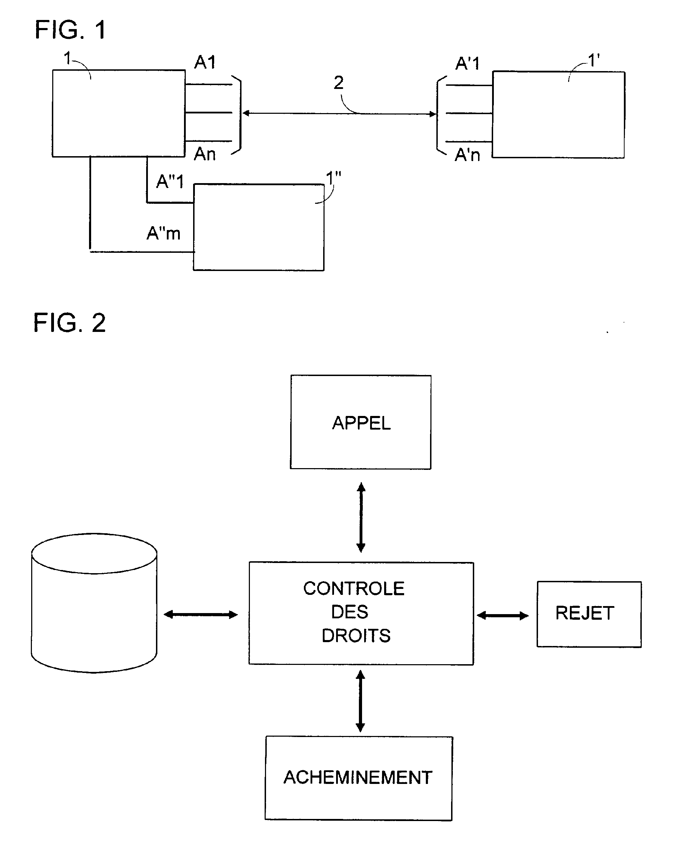

Le procédé de contrôle d'exploitation d'accès selon l'invention est destiné à être appliqué dans le cas d'un réseau de télécommunications où au moins deux autocommutateurs, tels que les deux autocommutateurs 1 et 1' schématisés sur la figure 1, sont reliés entre eux par une artère 2 comportant des accès dont au moins certains sont du type à signalisation dynamique et payante, tel par exemple les accès A1 et A'1. Comme il est connu, ces accès à signalisation dynamique et payante sont susceptibles d'être établis et désactivés à la demande et en fonction des besoins, ils sont susceptibles de coexister, dans le cadre de l'artère 2, avec d'autres accès établis de manière permanente dès leur mise en service.

D'une manière générale les accès de l'artère 2 permettent d'établir des communications, notamment voix et/ou données et de transmettre de la signalisation par l'intermédiaire des liaisons qui constituent l'artère. Comme il est connu, ces liaisons sont susceptibles d'être d'exploitation et éventuellement de nature différentes et chacun des autocommutateurs est supposé disposer des accès spécifiques correspondants. Il est usuel en particulier que des transmissions soient à réaliser au travers de l'artère 2, depuis l'un des autocommutateurs 1 et 1' ou éventuellement depuis et/ou vers un autre autocommutateur tel que 1", pour des applications déterminées. Ces applications peuvent correspondre à la satisfaction de besoins propres à au moins certains usagers, par exemple une application de type patron-secrétaire, transmission périodique de données sous fort volume, ou autre. Elles peuvent aussi correspondre à des tâches à réaliser qui sont propres au réseau et par exemple des tâches de supervision des terminaux des abonnés, de taxation des communications, de gestion des terminaux d'opératrice, etc.

Dans le cadre du procédé selon l'invention, il est prévu une attribution d'un droit d'utilisation à chacune des applications susceptibles d'avoir à exploiter un accès dynamique et payant pour communiquer par l'intermédiaire d'un chemin empruntant l'artère 2 et éventuellement via un accès dynamique et payant de cette artère. A titre d'exemple un tel chemin peut être établi depuis un accès 1m de l'autocommutateur 1" et via les deux autocommutateurs 1, 1' et l'artère 2 en empruntant l'accès supposé dynamique et payant A1.

L'attribution d'un tel droit d'utilisation est ici supposée être du ressort d'une autorité chargée de superviser la gestion des autocommutateurs. Si besoin est, ce droit est susceptible d'être attribué pour un accès via un seul des deux autocommutateurs reliés par l'artère. Il peut aussi être différent pour une même application suivant l'autocommutateur au niveau duquel une demande en vue de l'utilisation d'accès est faite. Dans l'exemple proposé et comme schématisé sur la figure 2, un stockage en base de données est prévu pour les droits d'utilisation attribués aux applications. Ce stockage est préférablement réalisé au niveau du ou des autocommutateurs par l'intermédiaire duquel ou desquels une application est susceptible d'initier un appel en vue de l'établissement d'une communication par un chemin empruntant un accès dynamique et payant.

Les droits attribués à chaque application pour l'exploitation d'un ou de plusieurs accès dynamiques et payants sont ici supposés stockés dans une base de données 3 accessible par le ou les autocommutateurs concernés. Dans une forme préférée de réalisation, une telle base de données 3 est individuellement associée, ou intégrée, à chacun des autocommutateurs et conserve les indications relatives aux droits des applications qui sont susceptibles de tenter d'utiliser un accès dynamique payant en départ à partir de l'autocommutateur individuellement associé.

Dans l'exemple proposé, il est prévu qu'une application puisse être autorisée ou non à utiliser un accès dynamique et payant pour les communications qu'elle veut faire établir et transiter au travers de l'artère à partir de l'un et/ou l'autre des deux autocommutateurs reliés par cette artère. Il est prévu de pouvoir attribuer des droits d'exploitation d'un accès dynamique et payant qui sont susceptibles de différer suivant les applications, l'un de ces droits permettant par exemple d'établir et d'utiliser un accès dynamique et payant, et un autre droit permettant d'utiliser un tel accès, une fois qu'il a été établi.

Il est par ailleurs prévu que l'établissement d'un accès dynamique et payant, par une application autorisée, entraîne la création d'une information destinée à être communiquée aux applications qui sont susceptibles d'utiliser leur droit d'utilisation d'un accès dynamique et payant établi au niveau de l'un et/ou éventuellement de l'autre des deux autocommutateurs concernés. Il est aussi prévu que cette information soit exploitée par les applications en attente de transmission d'informations par l'intermédiaire d'un tel accès pour assurer une utilisation aussi complète que possible des possibilités de trafic offertes par cet accès, pendant le temps où ledit accès est maintenu actif. Le maintien en activité d'un accès dynamique est payant est bien entendu conditionné par l'existence d'un trafic par l'intermédiaire de cet accès et l'accès est rendu inactif dès qu'il est possible avec un délai de retour à un état inactif qui est susceptible de varier en fonction de la ou des applications qui sont les dernières à utiliser cet accès pour une transmission d'informations.

Comme schématisé sur la figure 2, la mise en oeuvre du procédé selon l'invention s'effectue à chaque appel 4 en vue de l'établissement d'une communication par l'intermédiaire d'un accès dynamique et payant au niveau de l'autocommutateur, 1, 1' ou 1" initiateur de l'appel. Un processus de contrôle de droits d'accès 5 est alors engagé au niveau de cet autocommutateur en fonction de l'application appelante et l'acheminement 6 de l'appel par l'accès dynamique et payant visé est réalisé ou non en fonction du droit attribué à l'application, tel que stocké en base de données 3 pour l'autocommutateur. Le rejet 7 d'une demande d'établissement d'appel par le contrôle de droits d'accès 5 se traduit alors soit par une attente de l'application, si celle-ci ne dispose que d'un droit d'utilisation d'un accès dynamique et payant établi, soit par l'orientation de l'application en attente vers un accès différent.

En dernier lieu, il est aussi prévu que le droit d'utilisation attribué à une application puisse être soumis à une condition d'horaire et qu'il ne soit donc exploitable par cette application que dans une plage horaire déterminée, pour limiter le coût et/ou régulariser le trafic. La ou les applications concernées se trouvent alors avec un droit limité ou supprimé, hors de la ou des plages prévues pour elles.

## Revendications

1. Procédé de contrôle de l'exploitation d'un accès (A1, A'1), à signalisation dynamique payante, d'une artère (2) reliant deux autocommutateurs (1, 1') notamment en liaison avec des applications qui communiquent au travers d'autocommutateurs et qui sont susceptibles de vouloir exploiter de tels accès, caractérisé en ce qu'il prévoit une attribution de droits d'utilisation à chaque application concernée permettant à celle-ci soit de faire établir et d'utiliser un tel accès au moins, soit seulement d'utiliser un tel accès une fois que celui-ci a été établi, dans la mesure où un droit d'utilisation lui est attribué.

2. Procédé, selon la revendication 1, dans lequel il est prévu une information des applications susceptibles d'avoir à utiliser un accès dynamique payant, dès lors qu'un tel accès est établi pour permettre à ces applications d'utiliser cet accès aussi pleinement que possible.

3. Procédé, selon l'une des revendications 1, 2, dans lequel le contrôle du droit attribué à une application est réalisé au niveau de l'autocommutateur initiateur d'un appel en vue de l'établissement d'une communication destinée à transiter par un tel accès à signalisation dynamique payante, une même application ayant éventuellement un droit différent suivant l'autocommutateur à partir duquel l'établissement d'une communication est initié.

4. Procédé, selon l'une des revendications 1 à 3, dans lequel il est prévu une attribution de droits d'exploitation par plages horaires modulables.
